# EUROPÄISCHE PATENTANMELDUNG

(11) **EP 4 692 180 A1**
(43) Veröffentlichungstag der Anmeldung: **11.02.2026**
(21) Anmeldenummer: 24193629.3
(22) Anmeldetag: 08.08.2024
(51) Int. Cl.: C08J 5/18, G09F 3/00

(54) **METALLISIERTE FOLIE**

(71) Anmelder: Hueck Folien Gesellschaft m.b.H., 4342 Baumgartenberg (AT)
(72) Erfinder: AIGNER, Georg, 4482 Ennsdorf (AT); TRASSL, Stephan, 4342 Baumgartenberg (AT); BAUER, Andreas, 4342 Baumgartenberg (AT)
(74) Vertreter: Burger, Hannes Alfred

(57) **Zusammenfassung**

Die Erfindung betrifft eine metallisierte Folie (1) mit einer Trägerfolie (2) und einer auf der Trägerfolie (2) angeordneten metallischen Schicht (3), wobei die Trägerfolie (2) eine erste Hauptoberfläche und eine zweite Hauptoberfläche aufweist und die metallische Schicht (3) in einem auf der ersten Hauptoberfläche angeordneten Metallisierungsbereich (3a) der Trägerfolie (2) aufgebracht ist, wobei der Metallisierungsbereich (3a) zumindest 90%, insbesondere 100%, der ersten Hauptoberfläche (3a) bedeckt, wobei die metallische Schicht (3) den gesamten Metallisierungsbereich vollflächig und gleichmäßig bedeckt und die metallische Schicht (3) an jeder Stelle ihrer Oberfläche bei einer Betrachtung in Draufsicht von Seite der ersten Hauptoberfläche (3a) aus betrachtet ein selbes optisches und betrachtungswinkelunabhängiges Erscheinungsbild aufweist, dadurch gekennzeichnet, dass die metallische Schicht (3) aus zumindest einem Metall der 6., 10., 11., 12. oder 14. Gruppe des Periodensystems und/oder zweier oder mehrerer dieser Metalle gefertigt ist.

## Beschreibung

Die Erfindung betrifft eine Metallisierte Folie mit einer Trägerfolie und einer auf der Trägerfolie angeordneten metallischen Schicht, wobei die Trägerfolie eine erste Hauptoberfläche und eine zweite Hauptoberfläche aufweist und die metallische Schicht in einem auf der ersten Hauptoberfläche angeordneten Metallisierungsbereich der Trägerfolie aufgebracht ist, wobei der Metallisierungsbereich zumindest 90%, insbesondere 100%, der ersten Hauptoberfläche bedeckt, wobei die metallische Schicht den gesamten Metallisierungsbereich vollflächig und gleichmäßig bedeckt und die metallische Schicht an jeder Stelle ihrer Oberfläche bei einer Betrachtung in Draufsicht von Seite der ersten Hauptoberfläche aus betrachtet ein selbes optisches und betrachtungswinkelunabhängiges Erscheinungsbild aufweist.

Folien der eingangs genannten Art stellen ungeprägte Folien mit einer glatten und gleichmäßigen Metalloberfläche dar und finden beispielsweise als Etiketten für Flaschen und Behälter Verwendung. Ein derartiges Etikett ist aus der DE202004020691U1 bekannt geworden. Nachteilig an der bekannten Lösung ist vor allem, dass als metallische Schicht Aluminium verwendet wird. Üblicherweise wird bei Mehrwegflaschen bzw. Mehrwegbehältern das Etikett mittels NaOH Waschlauge abgewaschen, um die Flasche bzw. den Behälter wiederverwenden zu können. Die Lauge greift aber das verwendete Aluminium an, was zu einer Verunreinigung der Lauge sowie zur Entstehung von Wasserstoff führen kann. Bei der herkömmlichen Lösung kann daher ein häufiges Tauschen der Waschlauge erforderlich sein, was auch mit erhöhten Produktionskosten einhergeht. Neben der schwierigen Entsorgung der kontaminierten Lauge können sich mit den bekannten Lösungen auch Probleme hinsichtlich Umweltverträglichkeit und Nachhaltigkeit ergeben.

Es ist daher eine Aufgabe der Erfindung die oben genannten Nachteile zu überwinden.

Diese Aufgabe wird mit einer Folie der eingangs genannten Art erfindungsgemäß dadurch gelöst, dass die metallische Schicht aus zumindest einem Metall der 6., 10., 11., 12. oder 14. Gruppe des Periodensystems und/oder zweier oder mehrerer dieser Metalle gefertigt ist.

Die erfindungsgemäße Lösung erlaubt zum einen die Substitution von Aluminium und die damit einhergehenden Probleme bei der Entfernung der Etiketten während der

Wiederaufbereitung der Flaschen oder Behälter zu lösen. Zum anderen wird gleichzeitig eine Verbesserung der Korrosionsbeständigkeit der metallischen Schicht erzielt.

Weiters ermöglicht die Erfindung durch eine entsprechende Wahl des Metalls weiterhin Folien mit einem silbernen Eindruck, wie er durch die Verwendung von Aluminium erzeugt werden kann, herzustellen, ohne dabei Aluminium verwenden zu müssen. So kann es gemäß einer vorteilhaften Variante der Erfindung beispielsweise vorgesehen sein, dass die metallische Schicht aus Ni, Zn, Cd, Hg, Pb, Croder aus einer zumindest eines dieser Metalle enthaltenden Legierung und/oder Zinn oder einer Zinnlegierung und/oder Silber oder einer Silberlegierung gefertigt ist. Diese Variante der Erfindung ist beispielsweise besonders vorteilhaft für Etiketten.

Gemäß einer vorteilhaften Ausführungsform der Erfindung kann es vorgesehen sein, dass die Trägerfolie eine mono- oder bi-axial gereckte Folie ist.

Als besonders günstig hat sich herausgestellt, dass die Trägerfolie zumindest eines der Materialien aus der Gruppe Polyimid (PI), Polypropylen (PP), monoaxial orientiertes Polypropylen (MOPP), biaxial orientiertes Polypropylen (BOPP), Polyethylen (PE),monoaxial orientiertes Polyethylen (MDOPE), biaxial orientiertes Polyethylen (BDOPE), Polyphenylensulfid (PPS), Polyetheretherketon (PEEK), Polyetherketon (PEK), Polyethylenimid (PEI), Polysulfon (PSU), Polyaryletherketon (PAEK), Polyethylennaphthalat (PEN), flüssigkristalline Polymere (LCP), Polyester, Polybutylenterephthalat (PBT), Polyethylenterephthalat (PET), Polyamid (PA), Polycarbonat (PC), Cycloolefincopolymere (COC), Polyoximethylen (POM), Acrylnitril-butadien-styrol (ABS), Polyvinylchlorid (PVC) Ethylentetrafluorethylen (ETFE), Polytetrafluorethylen (PTFE), Polyvinylfluorid (PVF), Polyvinylidenfluorid (PVDF), Ethylen-Tetrafluorethylen-Hexafluorpropylen-Fluorterpolymer (EFEP), Cellulose- oder Lignin-basierte Kunststoffe, Polyhydroxyalkanoate (PHA), thermo-plastische Stärke (TPS), Polymilchsäure (PLA), Polycaprolacton (PCL), Polybutylensuccinat (PBS), Polymethylmethacrylat (PMMA), Polybutylenadipat-terephthalat (PBAT), Polymethylmethacrylat (PMMA) und/oder Mischungen und/oder Co-Polymere und/oder Verbundmaterialien dieser Materialien umfasst oder aus zumindest einem dieser Materialien hergestellt ist.

Bevorzugt weist die Trägerfolie eine Dicke von 5 µm - 250 µm, insbesondere eine Dicke zwischen 5 µm - 200 µm auf.

Die metallische Schicht kann eine Schichtdicke von 5 - 150 nm, bevorzugt 50 -150 nm, besonders bevorzugt 80 - 140 nm aufweisen.

Entsprechend einer Variante der Erfindung kann die metallische Schicht direkt auf der Trägerfolie angebracht sein. Alternativ kann es jedoch auch vorgesehen sein, dass zwischen der metallischen Schicht und der Trägerfolie zumindest eine weitere Schicht, insbesondere eine Haftvermittlerschicht und/oder Grundierungsschicht und/oder eine Funktionsschicht angeordnet ist.

Weiters kann es vorgesehen sein, dass auf der der Trägerfolie gegenüberliegenden Seite der metallischen Schicht zumindest eine weitere Schicht, insbesondere Schutzschicht und/oder Funktionsschicht angeordnet ist. Gemäß dieser Variante der Erfindung kann auf der metallischen Schicht eine Schutzschicht und/oder eine Funktionsschicht vorgesehen sein, insbesondere eine Korrosionsschutzschicht und/oder eine optische Eigenschaften, wie Farbe oder Opazität, verbessernde Schicht und/oder eine mechanische Eigenschaften, wie Kratz- oder Abriebfestigkeit, verbessernde Schicht und/oder eine elektrisch isolierende oder elektrisch leitende Schicht und/oder eine Wärmeleitfähigkeit verbessernde Schicht und/oder eine Barriereeigenschaften gegen Gas oder Flüssigkeiten, verbessernde Schicht und/oder eine Siegelfähigkeit verbessernde Schicht und/oder eine Bedruckbarkeit verbessernde Schicht.

Um eine Anbringung an einem Gegenstand zu ermöglichen, kann auf der zweiten Hauptoberfläche der Trägerfolie und/oder auf der metallischen Schicht eine Kleberschicht aufgebracht sein.

Weiters kann die Trägerfolie auf ihrer zweiten Hauptoberfläche und/oder die metallische Schicht auf ihrer der Trägerfolie abgewandten Seite eine Bedruckung aufweisen, insbesondere zumindest ein Bild, insbesondere ein Symbol und/oder Logo und/oder einen Code und/oder einen Text und/oder zumindest ein alphanumerisches Zeichen

Gemäß einer vorteilhaften Weiterbildung der Erfindung kann es vorgesehen sein, dass die metallische Schicht auf ihrer der Trägerfolie abgewandten Seite und/oder die zweite Hauptoberfläche der Trägerfolie mit einem Drucklackschicht als Grundierung für die Bedruckung bedruckt ist, wobei die Drucklackschicht bevorzugt zumindest ein Polyester, Polyurethan oder Mischungen davon oder zumindest ein Acrylat enthaltendes Bindemittel aufweist.

Zum besseren Verständnis der Erfindung wird diese anhand der nachfolgenden Figuren näher erläutert.

Es zeigen jeweils in stark vereinfachter, schematischer Darstellung:
- Fig. 1: eine Draufsicht auf eine erfindungsgemäße Folie;
- Fig. 2: einen ersten Schichtaufbau einer erfindungsgemäßen Folie;
- Fig. 3: einen zweiten Schichtaufbau einer erfindungsgemäßen Folie;
- Fig. 4: einen dritten Schichtaufbau einer erfindungsgemäßen Folie.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Im Folgenden werden die Ausführungsbeispiele figurenübergreifend beschrieben.

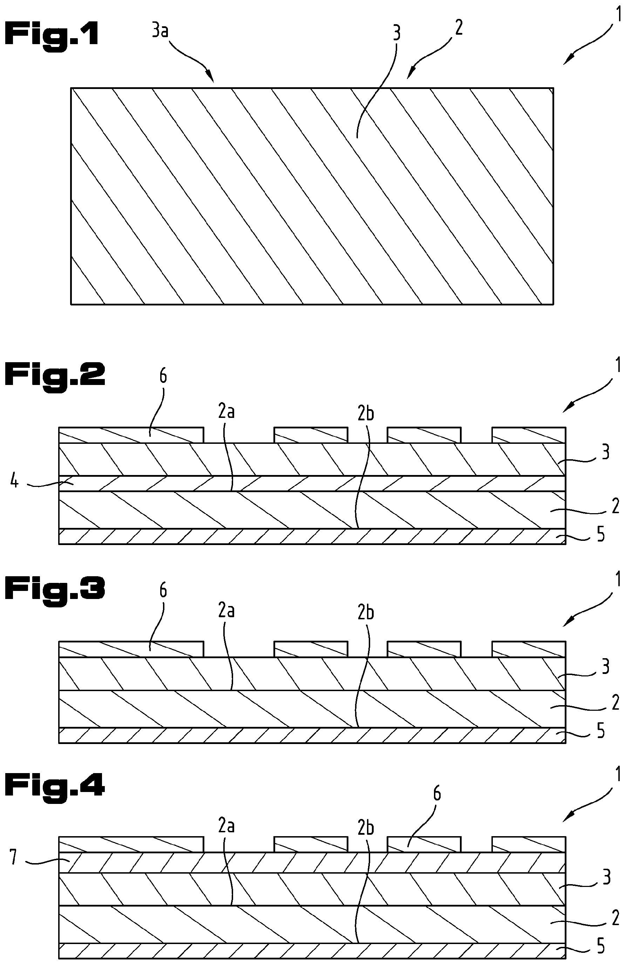

Gemäß Fig. 1 - 4 weist eine metallisierte Folie 1 eine Trägerfolie 2 und eine auf der Trägerfolie 2 angeordnete metallische Schicht 3 auf. Die Trägerfolie 2 weist eine erste Hauptoberfläche 2a und eine zweite Hauptoberfläche 2b auf. Die metallische Schicht 3 ist in einem auf der ersten Hauptoberfläche 2a angeordneten Metallisierungsbereich 3a der Trägerfolie 2 aufgebracht. Der Metallisierungsbereich 3a bedeckt zumindest 90%, bevorzugt 100%, der ersten Hauptoberfläche 3a. Die metallische Schicht 3 bedeckt den gesamten Metallisierungsbereich vollflächig und gleichmäßig. Zudem weist die metallische Schicht 3 an jeder Stelle ihrer Oberfläche bei einer Betrachtung in Draufsicht von Seite der ersten Hauptoberfläche 2a aus betrachtet ein selbes optisches und betrachtungswinkelunabhängiges Erscheinungsbild auf.

Die metallische Schicht 3 ist aus zumindest einem Metall der 6., 10., 11., 12. oder 14. Gruppe des Periodensystems gefertigt. Hierbei kann die metallische Schicht 3 aus nur einem einzigen Metall oder aber auch aus Legierungen mehrerer der oben genannten Metalle bestehen. Bevorzugt ist die metallische Schicht 3 aus Zinn oder einer Zinnlegierung und/oder Silber oder einer Silberlegierung gefertigt. Die metallische Schicht 3 kann beispielsweise durch PVD- oder CVD-Verfahren etwa durch thermisches Verdampfen, durch Sputtern oder Elektronenstrahlbedampfung auf die Trägerfolie 2 abgeschieden werden. Alternativ kann die metallische Schicht 3 aber auch auf die Trägerfolie 2 aufgedruckt werden.

Zwischen der metallischen Schicht 3 und der Trägerfolie 2 kann, wie in Fig. 2 dargestellt, eine weitere Schicht, beispielsweise eine Haftvermittlerschicht 4, eine Grundierung oder eine Funktionsschicht angeordnet sein. Alternativ kann die metallische Schicht 3 aber auch direkt auf die Trägerfolie 2 aufgebracht werden, wie dies in Fig. 3 gezeigt ist.

Die Dicke der metallischen Schicht 3 kann beispielsweise etwa 5 - 150 nm, bevorzugt 50 - 150 nm, besonders bevorzugt 80 - 140 nm betragen. Die Trägerfolie 2 weist bevorzugt eine Dicke von 5 µm - 250 µm, insbesondere zwischen 5 µm und 200 µm auf.

Bei der Trägerfolie 2 handelt es sich um eine Kunststofffolie, wobei die Trägerfolie 2 eine mono- oder bi-axial gereckte Folie sein kann. Die Trägerfolie 2 umfasst zumindest eines der Materialien aus der Gruppe Polyimid (PI), Polypropylen (PP), monoaxial orientiertes Polypropylen (MOPP), biaxial orientiertes Polypropylen (BOPP), Polyethylen (PE),monoaxial orientiertes Polyethylen (MDOPE), biaxial orientiertes Polyethylen (BDOPE), Polyphenylensulfid (PPS), Polyetheretherketon (PEEK), Polyetherketon (PEK), Polyethylenimid (PEI), Polysulfon (PSU), Polyaryletherketon (PAEK), Polyethylennaphthalat (PEN), flüssigkristalline Polymere (LCP), Polyester, Polybutylenterephthalat (PBT), Polyethylenterephthalat (PET), Polyamid (PA), Polycarbonat (PC), Cycloolefincopolymere (COC), Polyoximethylen (POM), Acrylnitril-butadien-styrol (ABS), Polyvinylchlorid (PVC) Ethylentetrafluorethylen (ETFE), Polytetrafluorethylen (PTFE), Polyvinylfluorid (PVF), Polyvinylidenfluorid (PVDF), Ethylen-Tetrafluorethylen-Hexafluorpropylen-Fluorterpolymer (EFEP), Cellulose- oder Lignin-basierte Kunststoffe, Polyhydroxyalkanoate (PHA), thermo-plastische Stärke (TPS), Polymilchsäure (PLA), Polycaprolacton (PCL), Polybutylensuccinat (PBS), Polybutylenadipat-terephthalat (PBAT), Polymethylmethacrylat (PMMA) und/oder Mischungen und/oder Co-Polymere und/oder Verbundmaterialien dieser Materialien oder ist aus zumindest einem dieser Materialien hergestellt.

Auf einer der metallischen Schicht 3 gegenüber liegenden Seite der Trägerfolie 2, d.h. auf der zweiten Hauptoberfläche 2b kann eine Kleberschicht 5 aufgebracht sein. Zusätzlich oder alternativ kann jedoch auch auf der metallischen Schicht 3 eine Kleberschicht 5 angeordnet sein.

Weiters kann die Trägerfolie 2 auf ihrer zweiten Hauptoberfläche 2b und/oder die metallische Schicht 3 auf ihrer der Trägerfolie 2 abgewandten Seite eine Bedruckung 5, beispielsweise ein Bild aufweisen, insbesondere ein Symbol und/oder Logo und/oder Code und/oder einen Text und/oder ein alphanumerisches Zeichen. Um ein gutes Bedrucken zu gewährleisten kann die zweite Hauptoberfläche 2b und/oder die metallische Schicht 3 noch zusätzlich mit einer Drucklackschicht 7 als Grundierung für das aufgedruckte Bild 6 versehen sein, wie dies in Fig. 4 dargestellt ist. Die Drucklackschicht 7 weist bevorzugt zumindest ein Polyester, Polyurethan oder Mischungen davon oder zumindest ein Acrylat enthaltendes Bindemittel auf. Natürlich kann die Drucklackschicht 7 auch bei den in Fig. 2 und 3 dargestellten Ausführungsformen vorhanden sein. Alternativ zur Verwendung der Drucklackschicht 7 kann auch ein direktes Bedrucken der zweiten Hauptoberfläche 2b und/oder der metallischen Schicht 3 erfolgen.

Alternativ oder zusätzlich kann es auch vorgesehen sein, dass die metallische Schicht 3 auf ihrer der Trägerfolie 2 abgewandten Seite weitere Schichten, wie eine Schutzschicht und/oder eine Funktionsschicht, insbesondere eine Korrosionsschutzschicht und/oder eine optische Eigenschaften, wie Farbe oder Opazität, verbessernde Schicht und/oder eine mechanische Eigenschaften, wie Kratz- oder Abriebfestigkeit, verbessernde Schicht und/oder eine elektrisch isolierende oder elektrisch leitende Schicht und/oder eine Wärmeleitfähigkeit verbessernde Schicht und/oder eine Barriereeigenschaften gegen Gas oder Flüssigkeiten, verbessernde Schicht und/oder eine Siegelfähigkeit verbessernde Schicht und/oder eine Bedruckbarkeit verbessernde Schicht aufweist.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

- 1: Folie
- 2: Trägerfolie
- 2a: erste Hauptoberfläche
- 2b: zweite Hauptoberfläche
- 3: metallische Schicht
- 3a: Metallisierungsbereich
- 4: Haftvermittlerschicht
- 5: Kleberschicht
- 6: Bedruckung
- 7: Drucklackschicht

## Patentansprüche

1. Metallisierte Folie (1) mit einer Trägerfolie (2) und einer auf der Trägerfolie (2) angeordneten metallischen Schicht (3), wobei die Trägerfolie (2) eine erste Hauptoberfläche (2a) und eine zweite Hauptoberfläche (2b) aufweist und die metallische Schicht (3) in einem auf der ersten Hauptoberfläche (2a) angeordneten Metallisierungsbereich (3a) der Trägerfolie (2) aufgebracht ist, wobei der Metallisierungsbereich (3a) zumindest 90%, insbesondere 100%, der ersten Hauptoberfläche (3a) bedeckt, wobei die metallische Schicht (3) den gesamten Metallisierungsbereich vollflächig und gleichmäßig bedeckt und die metallische Schicht (3) an jeder Stelle ihrer Oberfläche bei einer Betrachtung in Draufsicht von Seite der ersten Hauptoberfläche (3a) aus betrachtet ein selbes optisches und betrachtungswinkelunabhängiges Erscheinungsbild aufweist, **dadurch gekennzeichnet, dass** die metallische Schicht (3) aus zumindest einem Metall der 6., 10., 11., 12. oder 14. Gruppe des Periodensystems und/oder zweier oder mehrerer dieser Metalle gefertigt ist.

2. Folie nach Anspruch 1, **dadurch gekennzeichnet, dass** die metallische Schicht (3) aus Ni, Zn, Cd, Hg, Pb, Cr oder aus einer zumindest eines dieser Metalle enthaltenden Legierung und/oder aus Zinn oder einer Zinnlegierung und/oder aus Silber oder einer Silberlegierung gefertigt ist.

3. Folie nach einem der Anspruch 1 oder 2, **dadurch gekennzeichnet, dass** die Trägerfolie (2) eine Kunststofffolie ist.

4. Folie nach einem der Ansprüche 1 bis 3, **dadurch gekennzeichnet, dass** die Trägerfolie (2) eine mono- oder bi-axial gereckte Folie ist.

5. Folie nach einem der Ansprüche 1 bis 4, **dadurch gekennzeichnet, dass** die Trägerfolie (2) zumindest eines der Materialien aus der Gruppe Polyimid (PI), Polypropylen (PP), monoaxial orientiertes Polypropylen (MOPP), biaxial orientiertes Polypropylen (BOPP), Polyethylen (PE),monoaxial orientiertes Polyethylen (MDOPE), biaxial orientiertes Polyethylen (BDOPE), Polyphenylensulfid (PPS), Polyetheretherketon (PEEK), Polyetherketon (PEK), Polyethylenimid (PEI), Polysulfon (PSU), Polyaryletherketon (PAEK), Polyethylennaphthalat (PEN), flüssigkristalline Polymere (LCP), Polyester, Polybutylenterephthalat (PBT), Polyethylenterephthalat (PET), Polyamid (PA), Polycarbonat (PC), Cycloolefincopolymere (COC), Polyoximethylen (POM), Acrylnitril-butadien-styrol (ABS), Polyvinylchlorid (PVC) Ethylentetrafluorethylen (ETFE), Polytetrafluorethylen (PTFE), Polyvinylfluorid (PVF), Polyvinylidenfluorid (PVDF), Ethylen-Tetrafluorethylen-Hexafluorpropylen-Fluorterpolymer (EFEP), Cellulose- oder Lignin-basierte Kunststoffe, Polyhydroxyalkanoate (PHA), thermo-plastische Stärke (TPS), Polymilchsäure (PLA), Polycaprolacton (PCL), Polybutylensuccinat (PBS), Polybutylenadipat-terephthalat (PBAT), Polymethylmethacrylat (PMMA) und/oder Mischungen und/oder Co-Polymere und/oder Verbundmaterialien dieser Materialien umfasst oder aus zumindest einem dieser Materialien hergestellt ist.

6. Folie nach einem der Ansprüche 1 bis 5, **dadurch gekennzeichnet, dass** die Trägerfolie (2) eine Dicke von 5 µm - 250 µm, insbesondere eine Dicke zwischen 5 µm - 200 µm aufweist.

7. Folie nach einem der Ansprüche 1 bis 6, **dadurch gekennzeichnet, dass** die metallische Schicht (3) eine Schichtdicke von 5 - 150 nm, bevorzugt 50 -150 nm, besonders bevorzugt 80 - 140 nm aufweist.

8. Folie nach einem der Ansprüche 1 bis 7, **dadurch gekennzeichnet, dass** die metallische Schicht (3) direkt auf der Trägerfolie (2) angebracht ist.

9. Folie nach einem der Ansprüche 1 bis 8, **dadurch gekennzeichnet, dass** zwischen der metallischen Schicht (3) und der Trägerfolie (2) zumindest eine weitere Schicht, insbesondere eine Haftvermittlerschicht (4) und/oder Grundierungsschicht und/oder eine Funktionsschicht angeordnet ist.

10. Folie nach einem der Ansprüche 1bis 9 **dadurch gekennzeichnet, dass** auf der der Trägerfolie (2) gegenüberliegenden Seite der metallischen Schicht (3) zumindest eine weitere Schicht, insbesondere Schutzschicht und/oder Funktionsschicht angeordnet ist, insbesondere eine Korrosionsschutzschicht und/oder eine optische Eigenschaften, wie Farbe oder Opazität, verbessernde Schicht und/oder eine mechanische Eigenschaften, wie Kratz- oder Abriebfestigkeit, verbessernde Schicht und/oder eine elektrisch isolierende oder elektrisch leitende Schicht und/oder eine Wärmeleitfähigkeit verbessernde Schicht und/oder eine Barriereeigenschaften gegen Gas oder Flüssigkeiten, verbessernde Schicht und/oder eine Siegelfähigkeit verbessernde Schicht und/oder eine Bedruckbarkeit verbessernde Schicht.

11. Folie nach einem der Ansprüche 1 bis 10, **dadurch gekennzeichnet, dass** auf einer der metallischen Schicht (3) gegenüber liegenden zweiten Hauptoberfläche (2b) der Trägerfolie (2) und /oder auf der metallischen Schicht (3) eine Kleberschicht (5) aufgebracht ist.

12. Folie nach einem der Ansprüche 1 bis 11, **dadurch gekennzeichnet, dass** die Trägerfolie (2) auf ihrer zweiten Hauptoberfläche (2b) und/oder die metallische Schicht (3) auf ihrer der Trägerfolie (2) abgewandten Seite eine Bedruckung (6) aufweist, insbesondere zumindest ein Bild, insbesondere ein Symbol und/oder Logo und/oder Code einen Text und/oder zumindest ein alphanumerisches Zeichen.

13. Folie nach Anspruch 12, **dadurch gekennzeichnet, dass** die metallische Schicht (3) auf ihrer der Trägerfolie (2) abgewandten Seite und/oder die zweite Hauptoberfläche (2b) der Trägerfolie (2) mit einer Drucklackschicht (7) als Grundierung für die Bedruckung (6) versehen ist, wobei die Drucklackschicht (7) bevorzugt zumindest ein Polyester, Polyurethan oder Mischungen davon oder zumindest ein Acrylat enthaltendes Bindemittel aufweist.
